# EUROPEAN PATENT APPLICATION

(11) **EP 2 166 717 A1**
(43) Date of publication of application: **24.03.2010**
(21) Application number: 08164796.8
(22) Date of filing: 22.09.2008
(51) Int. Cl.: H04L 25/02

(54) **A device for connection to a can-bus**

(71) Applicant: Stoneridge Electronics AB, 168 66 Bromma (SE)
(72) Inventor: Carlsén, Mickael, SE-168 66, BROMMA (SE); Ekström, Peter, SE-168 66, BROMMA (SE)

(57) **Abstract**

The present invention relates to a device (20; 40) for connection to a CAN-bus, comprising a first connection position (21; 41) and a second connection position (22; 42). The device comprises a controllable CAN-bus terminating component between the first and second connection positions, allowing the device to be correctly connected to a CAN-bus at a terminating position and at a non-terminating position.

## Description

### FIELD OF INVENTION

The present invention relates generally to Controller Area Networks (CAN), and particularly to a device for connection to a CAN-bus.

### BACKGROUND

A digital tachograph is a recording and control device for road transport. The digital tachograph is generally composed of a Vehicle Unit (VU) containing a printer, two slots for smart cards and a display. The VU is connected to a gearbox of a vehicle it is installed in via a CAN of the vehicle.

A Controller Area Network (CAN) utilizes a bus particularly suited for e.g. a vehicle environment, which environment is difficult for data transmission due to i.a. unwanted energy spikes and electromagnetic pulses.

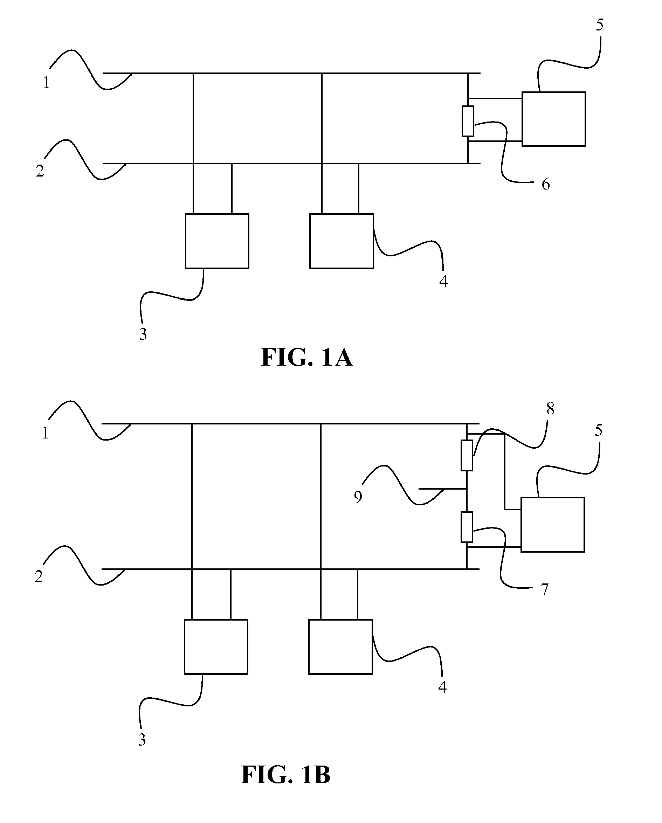

A part of a CAN-bus having three devices connected thereto is illustrated in Fig. 1A. The CAN-bus comprises a high voltage wire 1 and a low voltage wire 2. A first 3 and a second 4 device are connected along the bus and should thus not comprise a CAN-bus termination. A third device 5 is terminating the bus and should thus comprise a CAN-bus termination 6. The termination is a resistor 6 having a resistance of 120Ω. An alternative CAN-bus termination, a split termination, is illustrated in Fig. 1B. To reduce influences of voltage variations the termination comprises a first 7 and a second 8 resistor, each having a resistance of 60Ω, with a virtual voltage 9 in between having a voltage being the average of the voltage of the high voltage wire 1 and the voltage of the low voltage wire 2.

### SUMMARY OF THE INVENTION

A problem with connection of a device to a CAN-bus is that the device will need to be fitted specifically for different vehicle models, since the device might for different vehicle models be connected along the CAN-bus or at the end of the CAN-bus. With connection along the CAN-bus the device must not comprise a CAN-bus termination, and with connection at an end of the CAN-bus the device must comprise a CAN-bus termination.

An object of the present invention is to diminish the problem of different fittings for different vehicle models.

This object, among others, is according to the present invention attained by a device as defined by the appended claims.

By providing a device for connection to a CAN-bus, comprising a first connection position and a second connection position, wherein the device comprises a controllable CAN-bus terminating component between the first and second connection positions, the device to be correctly connected to a CAN-bus at a terminating position as well as at a non-terminating position without the need to specifically fit the device to a particular vehicle model.

The controllable CAN-bus terminating component preferably comprises two sets of a resistor and switching means in series, separated by a balance voltage position. Alternatively the controllable CAN-bus terminating component preferably comprises a resistor and switching means in series.

By preferably providing the switching means as an FET an inherent protection against unwanted energy spikes and electromagnetic pulses is achieved. Protection against unwanted energy spikes and electromagnetic pulses is preferably improved by providing overload protection means configured to protect the switching means.

A digital tachograph comprising a device for connection to a CAN-bus is preferably also provided. Other devices e.g. comprise CAN-connected analogue tachographs or other electronic control units (ECU).

Further features and advantages of the present invention will be evident from the following description.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:
Figs. 1A and 1B schematically illustrate connection of devices to a CAN-bus.
Fig. 2 schematically illustrates connection of a device to a CAN-bus according to a first embodiment of the present invention.
Fig. 3 shows a detailed circuit arrangement according to the connection schematically illustrated in Fig. 2
Fig. 4 schematically illustrates connection of a device to a CAN-bus according to a second embodiment of the present invention.
Fig. 5 shows a detailed circuit arrangement according to the connection schematically illustrated in Fig. 4

### DETAILED DESCRIPTION OF EMBODIMENTS

In the following description, for purpose of explanation and not limitation, specific details are set forth, such as particular techniques and applications in order to provide a thorough understanding of the present invention. However, it will be apparent for a person skilled in the art that the present invention may be practiced in other embodiments that depart from these specific details. In other instances, detailed description of well-known methods and apparatuses are omitted so as not to obscure the description of the present invention with unnecessary details.

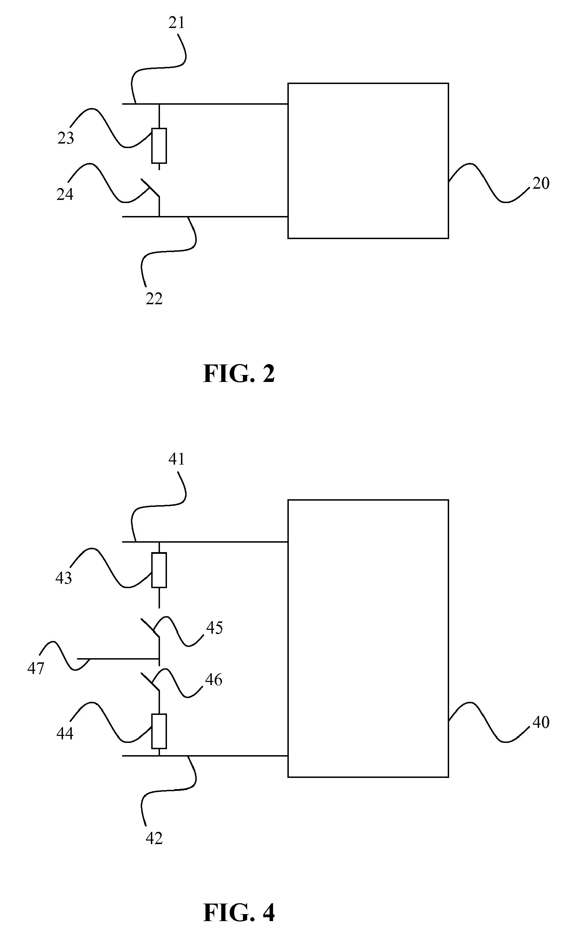

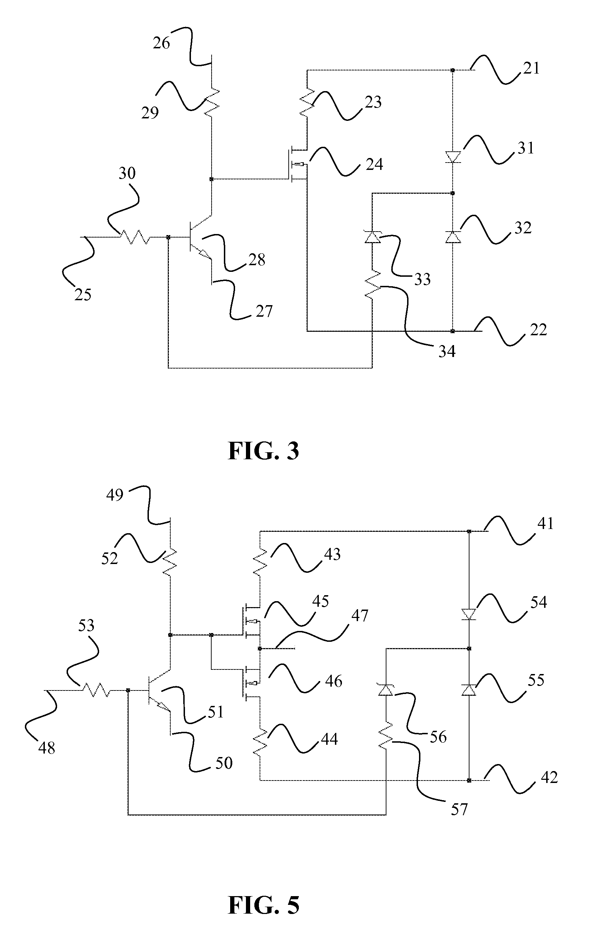

A first embodiment of a device for connection to a CAN-bus according to the present invention will now be described with reference to Figs. 2-3.

The device 20 for connection to a CAN-bus comprises a first connection position 21 and a second connection position 22 and a controllable CAN-bus terminating component there between. The controllable CAN-bus terminating component comprises a resistor 23 and switching means 24 in series. The switching means 24 is electrically controllable to disconnect the resistor 23 from the CAN-bus when the device is connected along the CAN-bus and to connect the resistor 23 to the CAN-bus for termination thereof when the device ends the CAN-bus. According to CAN standard the resistance of the terminating resistor 23 should be 120Ω for correct termination. The switching means 24 is e.g. electrically controlled by software parameter settings, e.g. run-time or register settings, controlled by e.g. a micro processor or other programmable logic device (PLD).

The switching means preferably comprises a Field-Effect Transistor (FET) 24, preferably a Metal-Oxide-Semiconductor FET (MOSFET), for some inherent protection against unwanted energy spikes and electromagnetic pulses. The drain of the MOSFET 24 is connected to the resistor 23, which in turn is connected to the first connection point 21, which should be connected to the high voltage part of the CAN-bus. The source of the MOSFET 24 is connected to the second connection point 22, which should be connected to the low voltage part of the CAN-bus. The gate of the MOSFET 24 is controlled through connection 25, which is connected to the base a bipolar transistor 28 through a resistor 30. The emitter of the bipolar transistor 28 is grounded 27. The collector of the bipolar transistor 28 is connected to the gate of the MOSFET 24, which connection also is connected to a supply line voltage 26 through a resistor 29. The connection 25 is connected to the controlling micro processor or other PLD.

For overload protection of the MOSFET 24 the device preferably comprises overload protection means 31-34 configured to protect the switching means. A first diode 31 is connected to the first connection point 21 and a second diode 32 is connected to the second connection point 22. The first and second diodes 31 and 32 are connected to each other to be able to drain base voltage from the bipolar transistor 28, e.g. when the voltage on the CAN-bus is too high or too low. The connection between the two diodes 31 and 32 is connected to the base of the bipolar transistor 28 through a zener diode 33 and a resistor 34 in series. When an overload condition/state applies the zener diode 33 will lower the overload current through the MOSFET 24 by saturating the bipolar transistor 28, which will cut-off the MOSFET 24, which thus will protect the MOSFET 24 from burning.

A device for connection to a CAN-bus according to a second embodiment of the present invention will now be described with reference to Figs. 4-5.

The device 40 for connection to a CAN-bus comprises a first connection position 41 and a second connection position 42 and a controllable CAN-bus terminating component there between. The controllable CAN-bus terminating component comprises a first set of a resistor 43 and switching means 45 in series and a second set of a resistor 44 and switching means 46. The first set is connected to the first connection point 41 and the second set is connected to the second connection point 42. The first and second set are connected to each other at a balance voltage position 47 having a voltage being the average of voltage of the high voltage of the first connection point 41 and the voltage of the low voltage point 42. The balance voltage position 47 is preferably decoupled to ground through a capacitor of about 10 nF to remove high frequency disturbances.

The switching means 45 and 46 are electrically controllable to disconnect the resistors 43 and 44 from the CAN-bus when the device is connected along the CAN-bus and to connect the resistors 43 and 44 to the CAN-bus for termination thereof when the device ends the CAN-bus. According to CAN standard the resistance of the split-terminating resistors 43 and 44 should be 60Ω each, for correct termination.

The switching means are preferably Field-Effect Transistors (FETs) 24, preferably Metal-Oxide-Semiconductor FET (MOSFET), for some inherent protection against unwanted energy spikes and electromagnetic pulses. The drain of the MOSFETs 45 and 46 are connected to the resistors 43 and 44, respectively, which in turn are connected to the first connection point 41 and the second connection point 42, respectively. An advantage with this second embodiment of the present invention compared to the first embodiment of the present invention described above is that the first and second connection points 41 and 42 can be connected to one respective of the high voltage part and low voltage part of the CAN-bus.

The sources of the MOSFETs 45 and 46 are in common connected to the balance voltage position 47. The gates of the MOSFETs 45 and 46 are in common controlled through connection 48, which is connected to the base a bipolar transistor 51 through a resistor 53. The emitter of the bipolar transistor 51 is grounded 50. The collector of the bipolar transistor 51 is connected to the gates of the MOSFETs 45 and 46, which connection also is connected to a supply line voltage 49 through a resistor 52.

For overload protection of the MOSFETs 46 and 46 the device preferably comprises overload protection means 54-57 configured to protect the switching means. A first diode 54 is connected to the first connection point 41 and a second diode 55 is connected to the second connection point 42. The first and second diodes 54 and 55 are connected to each other to be able to drain base voltage from the bipolar transistor 51, e.g. when the voltage on the CAN-bus is too high or too low. The connection between the two diodes 54 and 55 is connected to the base of the bipolar transistor 51 through a zener diode 56 and a resistor 57 in series. When an overload condition/state applies the zener diode 56 will lower the overload current through the MOSFETs 46 and 46 by saturating the bipolar transistor 51, which will cut-off the MOSFETs 46 and 46, which thus will protect the MOSFETs 46 and 46 from burning.

Although the devices 20 and 40 have been illustrated with the CAN-terminating component outside a general outline of the box for simplicity, they are in fact within a physical cover of the respective device.

A device according to the first embodiment of the present invention and a device according to the second embodiment of the present invention can be combined into a device to be correctly connected to a non-terminating position, a terminating position or a split-terminating position. In this case a configuration according to the first embodiment of the present invention is provided in parallel with a configuration according to the second embodiment of the present invention, with additional switching means for selecting between the two different embodiments.

It will be obvious that the present invention may be varied in a plurality of ways. Such variations are not to be regarded as departure from the scope of the present invention as defined by the appended claims. All such variations as would be obvious for a person skilled in the art are intended to be included within the scope of the present invention as defined by the appended claims.

## Claims

1. A device (20; 40) for connection to a CAN-bus, comprising a first connection position (21; 41) and a second connection position (22; 42), **characterized in that** said device comprises a controllable CAN-bus terminating component between said first and second connection positions, allowing the device to be correctly connected to a CAN-bus at a terminating position and at a non-terminating position.

2. The device according to claim 1, wherein said controllable CAN-bus terminating component comprises a resistor (23) and switching means (24) in series.

3. The device according to claim 1, wherein said controllable CAN-bus terminating component comprises two sets of a resistor (43, 44) and switching means (46, 46) in series, separated by a balance voltage position (47).

4. The device according to any of claims 1-3, wherein said switching means comprises an FET.

5. The device according to any of claims 2-4, wherein said controllable CAN-bus terminating component comprises overload protection means (31-34; 54-57) configured to protect said switching means.

6. The device according to any of claims 1-5, wherein said controllable CAN-bus termination component comprises a first set of resistor (23) and switching means (24) in series, and two additional sets of a resistor (43, 44) and switching means (46, 46) in series separated by a balance voltage position (47), wherein the first set and the two additional sets are arranged in parallel and controllable for selection through additional switching means.

7. A digital tachograph comprising a device according to any of claims 1-6.
